# EUROPÄISCHE PATENTSCHRIFT

(11) **EP 3 477 835 B1**
(45) Veröffentlichungstag und Bekanntmachung des Hinweises auf die Patenterteilung: **26.04.2023**
(21) Anmeldenummer: 18198582.1
(22) Anmeldetag: 04.10.2018
(51) Int. Cl.: H02M 1/44, H02M 5/458, H02M 1/12

(54) **UMRICHTER MIT GLEICHTAKTFILTER**
CONVERTER WITH COMMON MODE FILTER
CONVERTISSEUR POURVU DE FILTRE EN MODE COMMUN

(30) Priorität: 12.10.2017 DE 102017123758
(43) Veröffentlichungstag der Anmeldung: 01.05.2019
(73) Patentinhaber: Schaffner EMV AG, 4542 Luterbach (CH)
(72) Erfinder: Tschannen, Stefan, 4900 Langenthal (CH)
(74) Vertreter: P&TS SA (AG, Ltd.)

(56) Entgegenhaltungen:
- WO-A1-2014/140414
- AT-A1- 502 355
- CN-U- 203 607 860
- DE-A1-102007 008 765
- US-A1- 2007 278 988

## Beschreibung

### Technisches Gebiet

Die Erfindung bezieht sich auf einen Umrichter mit einem Filter zum Filtern von Gleichtaktstörungen (Gleichtaktfilter) und ein Stromrichter mit einem Gleichtaktfilter.

### Stand der Technik

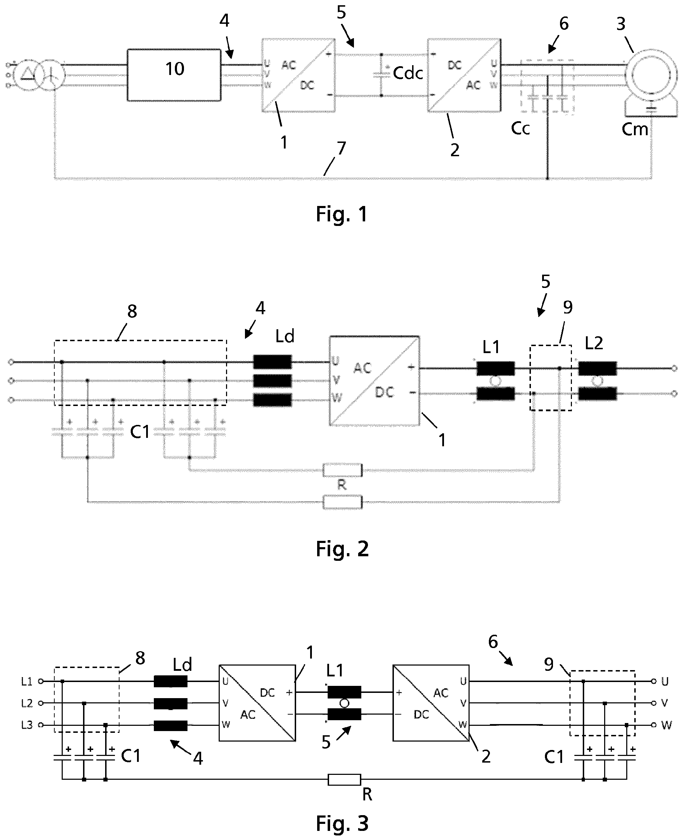

Fig. 1 zeigt einen üblichen Umrichter (auch Frequenzumrichter genannt) wie er für Motorsteuerungen oder für Generatoreinspeisungen verwendet wird. Der Umrichter weist einen netzseitigen Stromrichter 1 und einen lastseitigen Stromrichter 2 auf. Der netzseitige Stromrichter 1 ist über eine netzseitige Dreiphasenleitung 4 mit einem Wechselspannungsnetz verbunden. In manchen Ausführungsbeispielen weist die netzseitige Dreiphasenleitung 4 ein Gegentaktfilter 10 auf. Der Gegentaktfilter kann zum Beispiel eine Gegentaktdrossel, ein LC- oder ein LCL-Filter aufweisen. Der lastseitige Stromrichter 2 ist über eine lastseitige Dreiphasenleitung 6 mit einer Last 3 verbunden. Die Last 3 kann zum Beispiel eine Maschine sein, wobei die Maschine ein Motor und/oder ein Generator ist. Die Stromrichter 1 und 2 sind über einen Gleichspannungszwischenkreis 5 verbunden. Der Gleichspannungszwischenkreis 5 weist in der Regel einen Kondensator Cdc zwischen den zwei Leitungen des Gleichspannungszwischenkreises 5 auf. Die netzseitige Dreiphasenleitung 4, der netzseitige Stromrichter 1, der Gleichspannungszwischenkreis 5, der lastseitige Stromrichter 2 und die lastseitige Dreiphasenleitung 6 bilden den Stromhauptzweig aus, der die Hauptenergie zwischen dem Netz und der Last 3 transportiert.

Im Falle einer Motorsteuerung wandelt der netzseitige Stromrichter 1 als Gleichrichter die dreiphasige Wechselspannung der netzseitigen Dreiphasenleitung 4 in eine Gleichspannung des Gleichspannungszwischenkreises 5 um. Der lastseitige Stromrichter 2 als Wechselrichter wandelt die Gleichspannung des Gleichspannungszwischenkreises 5 in eine dreiphasige Wechselspannung variabler Frequenz der lastseitigen Dreiphasenleitung 6 um, welche den Motor 3 antreibt.

Im Falle einer Generatoreinspeisung wandelt der lastseitige Stromrichter 2 als Gleichrichter die dreiphasige Wechselspannung der lastseitigen Dreiphasenleitung 6 mit einer Frequenz, die von der Drehzahl des Generators 3 abhängt, in eine Gleichspannung des Gleichspannungszwischenkreises 5 um. Der netzseitige Stromrichter 1 als Wechselrichter wandelt die Gleichspannung des Gleichspannungszwischenkreises 5 in eine dreiphasige Wechselspannung der netzseitigen Dreiphasenleitung 4 um, welche mit einer konstanten Netzfrequenz in das Netz eingespeist wird.

Im Falle von regenerativen Antrieben kann die Maschine als Motor und als Generator fungieren. Zum Antreiben der Maschine 3 wird Energie aus dem Netz gezogen um wie oben beschrieben mit dem Umrichter den Motor 3 anzutreiben. Wenn Bremsenergie von der Maschine 3 gewonnen wird, fungiert die Maschine 3 als Generator und Energie wird über den Umrichter zurück in das Netzgespeist. In diesem Fall fungieren die Stromrichter 1 und 2 als Gleich- und Wechselrichter, je nach Energierichtung.

Die lastseitige Dreiphasenleitung 6 und die Last 3 verursachen ein parasitäre Kapazität Cc und Cm gegen Erde 7. Dies erlaubt von den Stromrichtern 1 und/oder 2 verursachten Gleichtaktstörungen über die Erdverbindung 7 wieder in das Netz zurückfliessen. Diese Gleichtaktstörungen sind insbesondere im Bereich der Schaltfrequenzen und deren harmonischen Oberschwingungen der Stromrichter 1 und 2 signifikant. Insbesondere , wenn aktiv geschaltete netzseitige Stromrichter 1 verwendet werden, kommt es zu starken Gleichtaktstörungen im Bereich der Schaltfrequenz des aktiv geschalteten netzseitigen Stromrichters 1. Stromkompensierte Drosseln, auch Gleichtaktdrosseln genannt, werden oft im Hauptstromzweig zum Filtern der Gleichtaktstörungen angeordnet. Dies reduziert die Gleichtaktstörungen oberhalb der Resonanzfrequenz aus Cc und Cm und der Induktivität der stromkompensierten Drossel. Allerdings verursacht diese Lösungen auch eine starke Verstärkung der Gleichtaktstörungen im Bereich der Resonanzfrequenz.

EP0899859 und DE202015100540 offenbaren einen Ausgangsfilter für einen Umrichter mit einem Nebenzweig zwischen dem Gleichspannungszwischenkreis 5 und der lastseitigen Dreiphasenleitung 6 parallel zum lastseitigen Stromrichter 2 und zu der stromkompensierten Drossel. Der Nebenzweig weist eine Serienschaltung von einem Widerstand und einem Kondensator auf. Dies bewirkt eine Dämpfung der Resonanzamplitude der stromkompensierten Drossel und eine Verschiebung der Resonanzfrequenz hin zu niedrigeren Frequenzen. Diese Lösung hat aber auch eine Reihe von Nachteilen. Diese Lösung ist nur als Ausgangsfilter geeignet und filtert hauptsächlich die lastseitigen Störungen. Die Gleichtaktstörungen aus den Schaltfrequenzen des netzseitigen Stromrichters 1 sind nicht gefiltert. Damit der Ausgangsfilter im Bereich der Resonanzfrequenz nicht harmonische Oberschwingen der Motorfrequenz verstärkt, muss die Resonanzfrequenz hoch genug gewählt werden. Da die Schaltfrequenz höher als die Resonanzfrequenz sein muss, muss diese auch entsprechend hoch sein. Ein weiterer Nachteil dieser Schaltung ist, dass diese eine Serienschaltung von zwei Kondensatoren in dem Nebenzweig aufweist. Bei den in dem Nebenzweig notwendigen hohen Kapazitäten ist dies sehr ungünstig.

Ferner offenbaren WO14140414A1, DE102007008765A1, US2007278988A1 und AT502355A1 unterschiedliche Schaltungsvarianten von Umrichtern oder Umrichtersystemen mit Gleichtaktfiltern, wobei auch diese zumindest einige der zuvor genannten Nachteile aufweisen.

### Darstellung der Erfindung

Es ist Aufgabe der Erfindung eine bessere Filterung von Gleichtaktstörungen in Umrichtern mit aktiv geschalteten netzseitigen Stromrichtern zu erreichen.

Erfindungsgemäss wird diese Aufgabe mit einem Umrichter nach Anspruch 1 gelöst.

Die netzseitige Anordnung des Nebenzweigs hat eine ganze Reihe von Vorteilen. Die feste Grundfrequenz der Netzspannung erlaubt es einfacher, die Resonanzfrequenz der Filterschaltung in einen Bereich ohne harmonische Oberschwingungen der Grundfrequenz der Netzspannung zu legen und somit auch niedrigere Schaltfrequenzen für den aktiv geschalteten netzseitigen Stromrichter zu verwenden. Die netzseitige Anordnung des Nebenzweigs erlaubt eine bessere Filterung der durch die Schaltfrequenzen des aktiv geschalteten netzseitigen Stromrichters verursachten Gleichtaktstörungen.

Weitere vorteilhafte Ausführungsformen sind in den abhängigen Ansprüchen angegeben.

In einem Ausführungsbeispiel weist der Nebenzweig mindestens zwei Verbindungsleitungen zwischen dem ersten Verbindungspunkt und dem zweiten Verbindungspunkt auf. Dies erlaubt es zwischen den Leitungen des ersten und zweiten Verbindungspunktes eine Serienschaltung von mehreren Kondensatoren zu vermeiden. Dies ist vorteilhaft, da für die Erfindung Kondensatoren mit grossen Kapazitäten benötigt werden, um die Resonanzfrequenz tief zu halten.

In einem Ausführungsbeispiel ist die Drossel in dem Gleichspannungszwischenkreis angeordnet. Dies hat den Vorteil, dass nur zwei Wicklungen für die Drossel benötigt werden.

In einem Ausführungsbeispiel liegt der zweite Verbindungspunkt im Gleichspannungszwischenkreis. Dies hat den Vorteil, dass die harmonischen Oberschwingungen der variablen Grundfrequenz der lastseitigen Dreiphasenleitung für die Lage der Resonanzfrequenz nicht berücksichtigt werden muss. Zusätzlich hat dies den Vorteil, dass weniger Leitungen in dem Nebenzweig benötigt werden, um eine Serienschaltung zweier Kondensatoren zu vermeiden. Diese Lösung hat weiterhin den Vorteil, dass sie für Anwendungen verwendet werden kann, wo mehrere Lasten oder sogar DC-Lasten & -Quellen angeschlossen sind.

In einem Ausführungsbeispiel liegt der zweite Verbindungspunkt in der lastseitigen Dreiphasenleitung. Dies hat den Vorteil, dass die Gleichtaktstörungen beider Stromrichter effektiv gefiltert werden. Dies hat weiterhin den Vorteil, dass der Umrichter keinen Anschluss zum Gleichspannungszwischenkreis benötigt und somit einfach nachgerüstet werden kann.

### Kurze Beschreibung der Figuren

Die Erfindung wird anhand der beigefügten Figuren näher erläutert, wobei zeigen
- **Fig. 1**: ein Schaltdiagram eines Systems mit einem Umrichter und einer Maschine nach dem Stand der Technik.
- **Fig. 2**: ein Schaltdiagram eines ersten möglichen Ausführungsbeispiels eines Umrichters nach dem Stand der Technik.
- **Fig. 3**: ein Schaltdiagram eines zweiten möglichen Ausführungsbeispiels eines Umrichters nach dem Stand der Technik.
- **Fig. 4**: ein Schaltdiagram eines ersten Ausführungsbeispiels eines erfindungsgemässen Umrichters.
- **Fig. 5**: ein Schaltdiagram eines zweiten Ausführungsbeispiels eines erfindungsgemässen Umrichters.
- **Fig. 6**: eine Abbildung der Transferfunktion des Gleichtaktstroms nach der Erfindung im Vergleich zum Stand der Technik.
- **Fig. 7**: eine Abbildung der Dämpfung des Gleichtaktfilters nach der Erfindung im Vergleich zum Stand der Technik.

### Wege zur Ausführung der Erfindung

Das erfindungsgemässe System weist ein Netz, ein Umrichter und eine Last 3 auf.

Das Netz ist vorzugsweise ein dreiphasiges Wechselspannungsnetz. Die Netzfrequenz des Wechselspannungsnetzes ist vorzugsweise konstant, zum Beispiel 50Hz oder 60Hz.

Die Last 3 ist vorzugsweise eine Maschine wie in Fig. 1 beschrieben, kann aber auch eine andere Last sein. Die Last 3 ist dabei weit auszulegen und beinhaltet sowohl Lasten im strengen Wortsinn, die Energie aus dem Netz ziehen, als auch Stromquellen, die Energie in das Netzspeisen. Ein Motor wäre zum Beispiel eine klassische Last, die Energie aus dem Netz zieht. Ein Generator wäre zum Beispiel eine Spannungsquelle, die hier auch als Last 3 bezeichnet wird. Ein Motorgenerator ist eine Last, die sowohl im Motorbetrieb Energie aus dem Netz zieht als auch im Generatorbetrieb in das Netz einspeist. Der Begriff Last 3 ist somit als Gegenpart zum Stromnetz zu verstehen und nicht in Bezug auf die Stromrichtung. Entsprechend bedeutet lastseitig die von dem Netz abgewandten Seite unabhängig von der tatsächlich fliessenden Stromrichtung. Die Last 3 kann auch eine Vielzahl von Wechselspannungslasten aufweisen. Weiterhin ist es möglich eine weitere Gleichspannungslast (in den Figuren nicht gezeigt) direkt in dem Gleichspannungszwischenkreis 5 anzuschliessen.

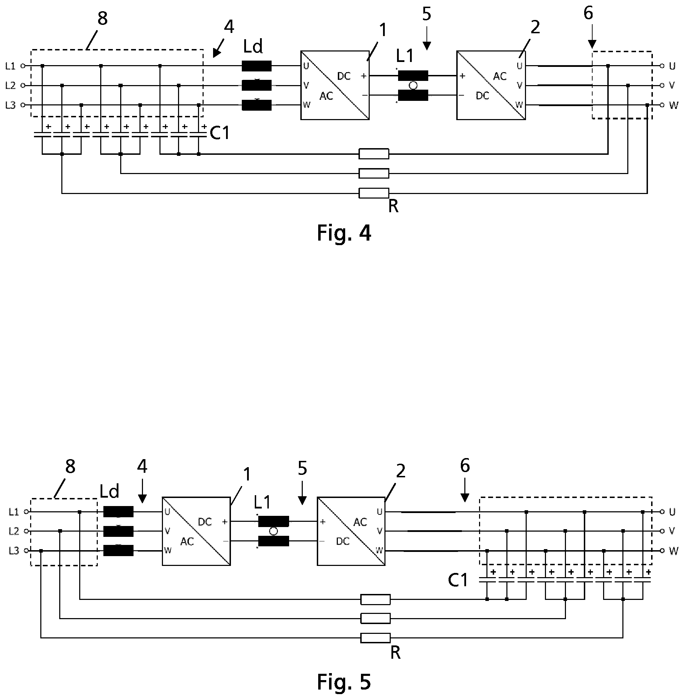

Der erfindungsgemässe Umrichter weist einen Stromhauptzweig und einen Nebenzweig auf. Ausführungsbeispiele des erfindungsgemässen Umrichters sind in den Fig. 4 und 5 gezeigt.

Der Stromhauptzweig weist einen netzseitigen Stromrichter 1, einen lastseitigen Stromrichter 2, eine netzseitige Dreiphasenleitung 4, einen Gleichspannungszwischenkreis 5, eine lastseitige Dreiphasenleitung 6 und eine Drossel L1 auf. Die Beschreibung des Systems und des Umrichters aus Fig. 1 treffen auch auf das erfindungsgemässe System und den erfindungsgemässen Umrichter zu, sofern nicht anders beschrieben.

Die netzseitige Dreiphasenleitung 4 umfasst die stromleitende Verbindung zwischen Netz und dem netzseitigen Stromrichter 1. Die netzseitige Dreiphasenleitung 4 kann dabei weitere Schaltungskomponenten aufweisen wie zum Beispiel den Gegentaktfilter 10, den ersten Verbindungspunkt 8, die Drossel L1, etc. Die netzseitige Dreiphasenleitung 4 kann sich auch aus mehreren Leitungsstücken zusammensetzen, die zum Beispiel die Komponenten in der netzseitigen Dreiphasenleitung 4 verbinden. Die lastseitige Dreiphasenleitung 6 umfasst die stromleitende Verbindung zwischen dem lastseitigen Stromrichter 2 und der Last 3. Die lastseitige Dreiphasenleitung 6 kann dabei weitere Schaltungskomponenten aufweisen wie zum Beispiel den zweiten Verbindungspunkt 9, die Drossel L1, etc. Die lastseitige Dreiphasenleitung 6 kann sich auch aus mehreren Leitungsstücken zusammensetzen, die zum Beispiel die Komponenten in der lastseitigen Dreiphasenleitung 6 verbinden. Der Gleichspannungszwischenkreis 5 umfasst die stromleitende Verbindung zwischen dem netzseitigen Stromrichter 1 und dem lastseitigen Stromrichter 2. Der Gleichspannungszwischenkreis 5 kann dabei weitere Schaltungskomponenten aufweisen wie zum Beispiel den zweiten Verbindungspunkt 9, die Drossel L1, etc. Der Gleichspannungszwischenkreis 5 kann sich auch aus mehreren Leitungsstücken zusammensetzen, die zum Beispiel die Komponenten in dem Gleichspannungszwischenkreis 5 verbinden. Der Gleichspannungszwischenkreis 5 weist eine positive Leitung und eine negative Leitung auf. Der Gleichspannungszwischenkreis 5 kann auch als (in Bezug auf den ersten Stromrichter 1) lastseitige Gleichspannungsleitung bezeichnet werden.

Der netzseitige Stromrichter 1 ist ein aktiv geschalteter Stromrichter (active front end). Solche aktiv geschalteten Stromrichter 1 erzeugen die Ausgabespannungsform auf der Basis von Pulsweitenmodulation. Dadurch können oft bessere Ausgabespannungsformen und niedrigere THD (Total Harmonic Distortion) erzielt werden. Ausserdem ist dadurch auch eine Umkehr der Energierichtung erreichbar, so dass der aktiv geschaltete Stromrichter 1 je nach Energierichtung sowohl als Gleichrichter als auch als Wechselrichter arbeiten kann.

Der Nebenzweig ist nun parallel zu dem netzseitigen Stromrichter 1, der Drossel L1 und/oder evtl. der Gegentaktdrossel Ld angeordnet. Der Nebenzweig verbindet einen ersten Verbindungspunkt 8 der netzseitigen Dreiphasenleitung 4 mit einem zweiten Verbindungspunkt 9 in dem Gleichspannungszwischenkreis 5 oder in der lastseitigen Dreiphasenleitung 6. Dadurch können durch den netzseitigen Stromrichter 1 erzeugte Gleichtaktstörungen ohne Umweg über die Erde zu dessen Quelle zurückfliessen. Der Nebenzweig weist eine Serienschaltung eines Widerstands R und einer Kapazität C1 auf. Der Widerstand R dämpft die über den Nebenzweig zurückfliessenden Gleichtaktstörungen des netzseitigen Stromrichters 1 und die Kapazität C1 verschiebt die Gleichtaktresonanzfrequenz zu niedrigeren Frequenzen. Der Verbindungszweig ist vorzugsweise so ausgebildet, dass jede Phase oder jede Leitung der netzseitigen Dreiphasenleitung 4 an dem ersten Verbindungspunkt 8 über eine Serienschaltung aus einem Kondensator C1 und einem Widerstand R mit jeder der Leitungen des Gleichspannungszwischenkreises 5 oder der lastseitigen Dreiphasenleitung 6 an dem zweiten Verbindungspunkt 9 verbunden ist. Der Verbindungszweig ist vorzugsweise so ausgebildet, dass jede Phase oder jede Leitung der netzseitigen Dreiphasenleitung 4 an dem ersten Verbindungspunkt 8 über eine Serienschaltung aus einem Kondensator C1 und einem Widerstand R mit einer der Leitungen des Gleichspannungszwischenkreises 5 oder der lastseitigen Dreiphasenleitung 6 an dem zweiten Verbindungspunkt 9 verbunden ist. Der Verbindungszweig ist weiterhin vorzugsweise so ausgebildet, dass jede Phase oder jede Leitung des Gleichspannungszwischenkreises 5 oder der lastseitigen Dreiphasenleitung 6 an dem zweiten Verbindungspunkt 9 über eine Serienschaltung aus einem Kondensator C1 und einem Widerstand R mit einer der Leitungen der netzseitigen Dreiphasenleitung 4 an dem ersten Verbindungspunkt 8 verbunden ist.

Vorzugsweise weist der Nebenzweig mindestens zwei Verbindungsleitungen zwischen dem ersten Verbindungspunkt 8 und dem zweiten Verbindungspunkt 9 auf, wie dies zum Beispiel in den Ausführungsbeispielen in den Fig. 2, 4 und 5 gezeigt ist. Vorzugsweise entspricht die Anzahl der Kondensatoren C1 in dem Nebenzweig mindestens der Anzahl der möglichen Verbindungskombinationen zwischen den drei Leitungen der netzseitigen Dreiphasenleitung 4 des ersten Verbindungspunktes 8 und den Leitungen des Gleichspannungszwischenkreises 5 (zwei) oder der lastseitigen Dreiphasenleitung 6 (drei) des zweiten Verbindungspunktes. Für die Anzahl der Kondensatoren C1 werden dabei nur funktionelle Kondensatoren gezählt. Ein funktioneller Kondensator kann dabei auch mehrere parallel (oder in Serie) verbundene Kondensatoren zwischen zwei Anschlusspunkten aufweisen, wobei zwischen den Anschlusspunkten keine weiteren Komponenten wie Widerstände, Spulen, etc. geschaltet sein dürfen, so dass die Schaltung aus Kondensatoren in der Gesamtschaltung nur eine Kapazität formt. Vorzugsweise weist jede Verbindungskombination zwischen den drei Leitungen der netzseitigen Dreiphasenleitung 4 des ersten Verbindungspunktes 8 und den Leitungen des Gleichspannungszwischenkreises 5 (zwei) oder der lastseitigen Dreiphasenleitung 6 (drei) des zweiten Verbindungspunktes einen anderen Kondensator C1 auf. Die Anzahl der Verbindungskombinationen bestimmt sich aus der Anzahl der Leitungen der netzseitigen Dreiphasenleitung 4 (drei) multipliziert mit der Anzahl der Leitungen des Gleichspannungszwischenkreises 5 (zwei) oder der lastseitigen Dreiphasenleitung 6 (drei), d.h. sechs, wenn der zweite Verbindungspunkt 9 in dem Gleichspannungszwischenkreis 5 liegt (siehe Fig. 2), und neun, wenn der zweite Verbindungspunkt 9 in der lastseitigen Dreiphasenleitung 6 liegt (siehe Fig. 4 und 5). Dies erlaubt nur einen Kondensator in Serie in jeder Verbindungskombination zu verwenden, was bei den für tiefe Resonanzfrequenzen notwendige hohen Kapazitäten von Vorteil ist. Vorzugsweise ist die Anzahl der (funktionellen) Widerstände niedriger als die der Verbindungskombinationen.

An einem ersten Ende des Nebenzweigs ist jede Verbindungsleitung über eine Sternschaltung mit einem Kondensator C1 mit jeder Leitung der netzseitigen Dreiphasenleitung 4 an dem ersten Verbindungspunkt 8 oder mit jeder der Leitungen des Gleichspannungszwischenkreises 5 oder der lastseitigen Dreiphasenleitung 6 verbunden (Kondensator-Stern Schaltung). Dazu wird ein Sternpunkt am ersten Ende jeder Verbindungsleitung vorgesehen, wobei jede Leitung des mit dem ersten Ende der Verbindungsleitung verbundenen Hauptstromzweigs über einen Kondensator C1 mit dem Sternpunkt verbunden ist. Ein Widerstand ist vorzugsweise zwischen dem Sternpunkt und dem zweiten Ende jeder Verbindungsleitung vorgesehen. Vorzugsweise wird dabei an einem zweiten Ende des Nebenzweigs jeweils eine Verbindungsleitung mit je einer der Leitungen des Hauptstromzweigs, d.h. mit je einer Leitung der netzseitigen Dreiphasenleitung 4 an dem ersten Verbindungspunkt 8 oder mit je einer der Leitungen des Gleichspannungszwischenkreises 5 oder der lastseitigen Dreiphasenleitung 6, verbunden ist. Somit startet an dem zweiten Ende des Nebenzweigs von jeder Leitung des ersten oder zweiten Verbindungspunkts (genau) eine Verbindungsleitung. Im nicht beanspruchten Ausführungsbeispiel der Fig. 2 ist das erste Ende an dem ersten Verbindungspunkt 8 in der netzseitigen Dreiphasenleitung 4 und das zweite Ende an dem zweiten Verbindungspunkt 9 in dem Gleichspannungszwischenkreis 5 angeordnet. Dadurch ist jede der zwei Leitungen des Gleichspannungszwischenkreises 5 über einen Widerstand mit einem Sternpunkt verbunden. Der Sternpunkt jeder Verbindungsleitung ist jeweils über einen Kondensator C1 mit jeder Leitung der netzseitigen Dreiphasenleitung 4 verbunden. In dem Ausführungsbeispiel der Fig. 4 ist das erste Ende an dem ersten Verbindungspunkt 8 in der netzseitigen Dreiphasenleitung 4 und das zweite Ende an dem zweiten Verbindungspunkt 9 in der lastseitigen Dreiphasenleitung 6 angeordnet. Dadurch ist jede der drei Leitungen der lastseitigen Dreiphasenleitung 6 über einen Widerstand mit einem Sternpunkt verbunden. Der Sternpunkt jeder Verbindungsleitung ist jeweils über einen Kondensator C1 mit jeder Leitung der netzseitigen Dreiphasenleitung 4 verbunden. In dem Ausführungsbeispiel der Fig. 5 ist das zweite Ende an dem ersten Verbindungspunkt 8 in der netzseitigen Dreiphasenleitung 4 und das erste Ende an dem zweiten Verbindungspunkt 9 in der lastseitigen Dreiphasenleitung 6 angeordnet. Dadurch ist jede der drei Leitungen der netzseitigen Dreiphasenleitung 4 über einen Widerstand mit einem Sternpunkt verbunden. Der Sternpunkt jeder Verbindungsleitung ist jeweils über einen Kondensator C1 mit jeder Leitung der lastseitigen Dreiphasenleitung 5 verbunden. In einem nicht gezeigten Ausführungsbeispiel könnte auch das zweite Ende an dem ersten Verbindungspunkt 8 in der netzseitigen Dreiphasenleitung 4 und das erste Ende an dem zweiten Verbindungspunkt 9 in dem Gleichspannungszwischenkreis 5 angeordnet sein. Dadurch ist jede der drei Leitungen der netzseitigen Dreiphasenleitung 4 über einen Widerstand mit einem Sternpunkt verbunden. Der Sternpunkt jeder Verbindungsleitung ist jeweils über einen Kondensator C1 mit jeder Leitung des Gleichspannungszwischenkreises 5 verbunden. In einem weiteren alternativen Ausführungsbeispiel könnte anstatt der Sternschaltungen auch eine Verbindungsleitung mit einer Serienschaltung aus einem Widerstand und einem Kondensator für jede mögliche Kombination aus den Leitungen des ersten Verbindungspunkts 8 und den Leitungen des zweiten Verbindungspunkts 9 vorgesehen werden. Das würde aber für den zweiten Verbindungspunkt 9 im Gleichspannungszwischenkreis 5 sechs Verbindungsleitungen mit sechs Kondensatoren und sechs Widerständen und für den zweiten Verbindungspunkt 9 in der lastseitigen Dreiphasenleitung 6 neun Verbindungsleitungen mit neun Kondensatoren und neun Widerständen bedeuten. Ebenfalls wäre es möglich den Widerstand in die Kondensator-Stern-Schaltung aufzunehmen und die Kondensator-Stern-Schaltung als Kondensator-Widerstands-SternSchaltung auszuführen. In einer solchen Kondensator-Stern-Schaltung würde zusätzlich zu dem Kondensator ein Widerstand zwischen dem Sternpunkt und jeder Leitung des Stromhauptzweigs an dem ersten und/oder zweiten Verbindungspunkt 8,9 angeordnet sein.

Gemäss eines nicht beanspruchten Ausführungsbeispiels ist es auch möglich für den Nebenzweig nur eine Verbindungsleitung vorzusehen, die an jedem Ende, das heisst an dem ersten und zweiten Verbindungspunkt 8 und 9, über eine Sternschaltung die Verbindungsleitung über einen Kondensator C1 mit jeder Leitung des ersten und zweiten Verbindungspunkts 8 und 9 verbindet. Dies ist zum Beispiel in Fig. 3 für einen zweiten Verbindungspunkt 9 in der lastseitigen Dreiphasenleitung 6 gezeigt, kann aber auch für einen zweiten Verbindungspunkt 9 in dem Gleichspannungszwischenkreis 5 realisiert werden. Nachteil an dieser Ausführungsform ist, dass die Gesamtkapazität im Nebenzweig dadurch reduziert wird.

Die Drossel L1 ist in dem Stromhauptzweig zwischen dem ersten Verbindungspunkt 8 und dem zweiten Verbindungspunkt 9 angeordnet. Die Drossel L1 ist eine stromkompensierte Drossel, auch Gleichtaktdrossel genannt. Die Position der Drossel L1 im Stromhauptzweig zwischen dem ersten Verbindungspunkt 8 und dem zweiten Verbindungspunkt 9 spielt dabei schaltungstechnisch keine Rolle. Die Drossel L1 kann in der netzseitigen Dreiphasenleitung 4, in dem Gleichspannungszwischenkreis 5 (siehe Fig. 2) oder, wenn der zweite Verbindungspunkt 9 in der lastseitigen Dreiphasenleitung 6 liegt, in der lastseitigen Dreiphasenleitung 6 liegen. Es ist auch möglich, die Drossel L1 durch mehrere zwischen dem ersten und zweiten Verbindungspunkt 8 und 9 in Serie geschalteten Drosseln L1 zu bilden . Dies erlaubt die einzelnen Drosseln kleiner auszubilden. Vorzugsweise wird die Drossel L1 in dem Gleichspannungszwischenkreis 5 angeordnet, da so nur zwei Wicklungen notwendig sind.

Optional kann noch eine weitere Spule L2 zwischen dem zweiten Verbindungspunkt 9 und der Maschine 3 angeordnet sein. Vorzugsweise ist die weitere Drossel L2 zwischen dem zweiten Verbindungspunkt 9 und der Last 3 bzw. dem lastseitigen Stromrichter 2 angeordnet. Die weitere Drossel L2 ist ebenfalls eine stromkompensierte Drossel. Die weitere Drossel L2 zwischen dem zweiten Verbindungspunkt 9 und dem lastseitigen Stromrichter 2 erzeugt eine zusätzliche Impedanz für die von dem lastseitigen Stromrichter 2 erzeugten Gleichtaktströmen, die über den Nebenzweig die Drossel L1 umgehen können.

Vorzugsweise weist der Stromhauptzweig in der netzseitigen Dreiphasenleitung 4 zwischen dem netzseitigen Stromrichter 1 und dem ersten Verbindungspunkt 8 eine Gegentaktdrossel Ld auf. Diese Gegentaktdrossel Ld verhindert hohe Überströme in den Kondensatoren C1 des Nebenzweigs. Die Gegentaktdrossel Ld kann dabei Teil des in Fig. 1 erwähnten Gegentaktfilters 10 sein, der zum Beispiel als L-, LC- oder LCL-Filter ausgebildet sein kann. Dabei kann entweder der ganze L-, LC- oder LCL-Filter zwischen dem ersten Verbindungspunkt 8 und dem netzseitigen Stromrichter 1 oder aber nur dessen gleichrichterseitige Gegentaktdrossel Ld angeordnet sein.

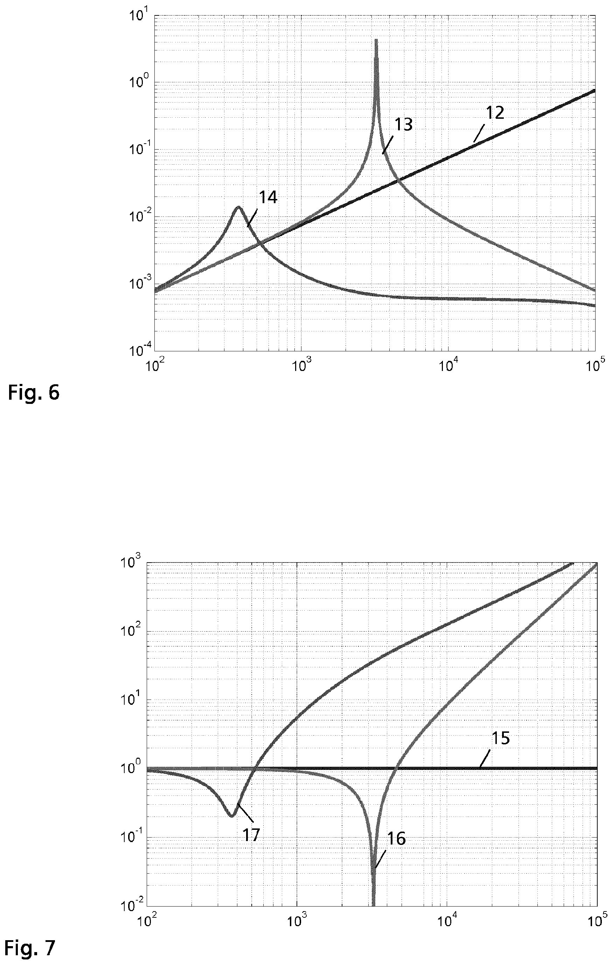

Fig. 6 zeigt die Transferfunktion des Gleichtaktstroms. Die Y-Achse zeigt die Übertragungsadmittanz des netzseitigen Gleichtaktstromes dividiert durch die Gleichtaktspannung erzeugt von dem Stromrichter 1 (1/Ω) und die X-Achse die Frequenz (Hz). Die Kurve 12 zeigt die Transferfunktion eines Umrichters ohne Gleichtaktfilter für eine bestimmte parasitäre Kapazität der Last 3 wie in Fig. 1 gezeigt. Die Kurve 13 zeigt einen Umrichter mit einer stromkompensierten Drossel in dem Stromhauptzweig. Die Kurve 14 zeigt einen Umrichter mit dem erfindungsgemässen Nebenzweig. Die Kurven 12, 13 und 14 sind jeweils für ideale Komponenten dargestellt. Fig. 7 zeigt die Gleichtaktfilterperformance bzw. die Dämpfung des Gleichtaktfilters relativ zu dem Umrichter ohne Gleichtaktfilter. Die Y-Achse zeigt den Faktor der Dämpfung (abs) und die X-Achse die Frequenz (Hz). Die Dämpfung ist der Gleichtaktstrom ohne Filter dividiert durch den Gleichtaktstrom mit Filter. Die Kurve 15 zeigt die Dämpfung eines Umrichters ohne Gleichtaktfilter für eine bestimmte parasitäre Kapazität der Last 3 wie in Fig. 1 gezeigt und ist deshalb immer 1. Die Kurve 16 zeigt einen Umrichter mit einer stromkompensierten Drossel in dem Stromhauptzweig. Die Kurve 16 zeigt einen Umrichter mit dem erfindungsgemässen Nebenzweig. Die Kurven 15, 16 und 17 sind jeweils für ideale Komponenten dargestellt. Es wird deutlich, dass der Nebenzweig die Gleichtaktstörungen des netzseitigen Stromrichters 1 oberhalb der Resonanzfrequenz effektiver reduzieren kann als im Stand der Technik.

Die Induktivität der stromkompensierten Drossel L1 und die Kapazität des Nebenzweigs C1 werden dabei so gewählt, dass die Gleichtaktresonanzfrequenz des Gleichtaktfilters des Umrichters (siehe Kurve 14 in Fig. 6 und Kurve 17 in Fig. 7) zwischen den harmonischen Oberschwingungen der Netzfrequenz liegt. Dies erlaubt eine niedrigere Resonanzfrequenz, wodurch niedrigere minimale Schaltfrequenzen in dem netzseitigen Stromrichter 1 verwendet werden können. Vorzugsweise ist die Gleichtaktresonanzfrequenz kleiner als 2 kHz, vorzugsweise kleiner 1,5 kHz, vorzugsweise kleiner 1,3 kHz, vorzugsweise kleiner 1,2 kHz, vorzugsweise kleiner 1,1 kHz, vorzugsweise kleiner 1 kHz, vorzugsweise kleiner 900Hz, vorzugsweise kleiner als 800 Hz, vorzugsweise kleiner als 700 Hz, vorzugsweise kleiner als 600 Hz, vorzugsweise kleiner als 500 Hz. Vorzugsweise ist die Gleichtaktresonanzfrequenz kleiner als die 21-fache Netzfrequenz und/oder vorzugsweise grösser als die 15-fache Netzfrequenz der netzseitigen Dreiphasenleitung.

Für Gleichspannungslasten kann dieses Konzept auch für Aktive Front Ends ohne lastseitigen Stromrichter 2 angewandt werden. Ein solcher Stromrichter mit Gleichtaktfilter entspricht einem der oben beschriebenen Umrichter mit Gleichtaktfilter mit dem zweiten Verbindungspunkt 9 in der lastseitigen Gleichspannungsleitung 5 ohne einen lastseitigen Stromrichter 2 und ohne die lastseitige Dreiphasenleitung 6. Die Gleichspannungslast wird dann direkt an die lastseitige Gleichspannungsleitung 5 angeschlossen. Die für den Umrichter beschriebenen optionalen Ausführungsformen können entsprechend Anwendung finden. Der Stromrichter mit Gleichtaktfilter weist somit in dem Hauptstromzweig die netzseitige Dreiphasenleitung 4, den als Aktiver Front End ausgebildeter Stromrichter 1 und die lastseitige Gleichspannungsleitung 5 auf. Zusätzlich weist der Stromrichter mit Gleichtaktfilter einen Nebenzweig zwischen einem ersten Verbindungspunkt 8 in der netzseitigen Dreiphasenleitung 4 und einem zweiten Verbindungspunkt 9 in der lastseitigen Gleichspannungsleitung 5 mit einer Serienschaltung aus Kapazität und Widerstand auf. Für die Beschreibung des Nebenzweigs und der optionalen Ausführungen des Stromhauptzweigs wird auf die Beschreibung des Umrichters in Fig. 2 verwiesen, wobei das darin dargestellte Ausführungsbeispiel nicht beansprucht wird.

So kann ein System aus einem Netz, dem Stromrichter mit Gleichtaktfilter und einer Gleichspannungslast gebildet werden.

## Patentansprüche

1. Umrichter aufweisend
einen Stromhauptzweig mit einer netzseitigen Dreiphasenleitung (4), mit einem Gleichspannungszwischenkreis (5) und mit einer lastseitigen Dreiphasenleitung (6), wobei die netzseitige Dreiphasenleitung (4) über einen netzseitigen Stromrichter (1) mit dem Gleichspannungszwischenkreis (5) verbunden ist, wobei der Gleichspannungszwischenkreis (5) über einen lastseitigen Stromrichter (2) mit der lastseitigen Dreiphasenleitung (6) verbunden ist,
einen parallel zu dem netzseitigen Stromrichter (1) angeordneten Nebenzweig zwischen einem ersten Verbindungspunkt (8) in der netzseitigen Dreiphasenleitung (4) und einem zweiten Verbindungspunkt (9) in der lastseitigen Dreiphasenleitung (6),
wobei der Stromhauptzweig zwischen dem ersten Verbindungspunkt (8) und dem zweiten Verbindungspunkt (9) eine Drossel (L1) aufweist, **dadurch gekennzeichnet, dass**
der Nebenzweig drei Verbindungsleitungen zwischen dem ersten Verbindungspunkt (8) und dem zweiten Verbindungspunkt (9) aufweist, wobei der Nebenzweig so ausgebildet ist, dass jede Verbindungsleitung zwischen dem ersten Verbindungspunkt (8) und dem zweiten Verbindungspunkt (9) eine Serienschaltung eines Kondensators (C1) und eines Widerstands (R) aufweist, wobei der zweite Verbindungspunkt (9) in der lastseitigen Dreiphasenleitung (6) liegt, wobei jede Verbindungsleitung an einem ersten Ende über eine Kondensatoren (C1) der Serienschaltung aufweisende Kondensator-Stern- Schaltung mit jeder Leitung der netzseitigen Dreiphasenleitung (4) verbunden ist, und wobei jede Verbindungsleitung an einem dem ersten Ende entgegengesetzten zweiten Ende mit je einer der Leitungen der lastseitigen Dreiphasenleitung (6) verbunden ist, oder wobei jede Verbindungsleitung an einem ersten Ende über eine Kondensatoren (C1) der Serienschaltung aufweisende Kondensator-SternSchaltung mit jeder Leitung der lastseitigen Dreiphasenleitung (6) verbunden ist, und wobei jede Verbindungsleitung an einem dem ersten Ende entgegengesetzten zweiten Ende mit je einer Leitung der netzseitigen Dreiphasenleitung (4) verbunden ist.

2. Umrichter nach Anspruch 1, wobei der netzseitige Stromrichter (1) ein aktiv geschalteter netzseitiger Stromrichter ist.

3. Umrichter nach Anspruch 1 oder 2, wobei jede mögliche Verbindungskombination des Nebenzweigs zwischen drei Leitungen der netzseitigen Dreiphasenleitung (4) des ersten Verbindungspunktes (8) und Leitungen der lastseitigen Dreiphasenleitung (6) des zweiten Verbindungspunktes (9) einen anderen Kondensator (C1) aufweist.

4. Umrichter nach einem der Ansprüche 1 bis 3, wobei genau eine Verbindungsleitung zu dem ersten Ende von dem jeweils zweiten Ende des Nebenzweigs jeder Leitung der netzseitigen Dreiphasenleitung (4) oder der lastseitigen Dreiphasenleitung (6) ausgeht.

5. Umrichter nach einem der Ansprüche 1 bis 4, wobei jede Verbindungsleitung einen Widerstand (R) zwischen einem Sternpunkt der Kondensator-Stern- Schaltung und dem zweiten Ende aufweist.

6. Umrichter nach einem der Ansprüche 1 bis 5, wobei die netzseitige Dreiphasenleitung (4) ausgebildet ist, um eine stromleitende Verbindung zwischen einem dreiphasigen Wechselspannungsnetz mit einer konstanten Netzfrequenz und dem netzseitigen Stromrichter (1) herzustellen.

7. Umrichter nach einem der Ansprüche 1 bis 6, wobei der Nebenzweig so ausgebildet ist, dass zwischen jeder Leitung des ersten Verbindungspunktes (8) und jeder Leitung des zweiten Verbindungspunktes (9) nur ein Kondensator (C1) geschaltet ist.

8. Umrichter nach einem der Ansprüche 1 bis 7, wobei die Drossel (L1) eine stromkompensierte Drossel (L1) ist.

9. Umrichter nach einem der Ansprüche 1 bis 8, wobei die Drossel (L1) in dem Gleichspannungszwischenkreis (5) angeordnet ist.

10. Umrichter nach einem der Ansprüche 1 bis 9, aufweisend eine Gegentaktdrossel (Ld), die zwischen dem ersten Verbindungspunkt (8) und dem netzseitigen Stromrichter (1) angeordnet ist.

11. Umrichter nach Anspruch 10, wobei die Gegentaktdrossel (Ld) die gleichrichterseitige Drossel eines LCL-Filters ist, wobei der LCL-Filter eine netzseitige Drossel zwischen dem Netz und dem ersten Verbindungspunkt (8) aufweist, wobei die Kapazität des LCL-Filters durch die Kapazität (C1) des Nebenzweigs gebildet wird.

12. System aufweisend:
einem Umrichter nach einem der Ansprüche 1 bis 11,
eine Last (3) verbunden mit der lastseitigen Dreiphasenleitung (6), und
ein dreiphasiges Wechselspannungsnetz verbunden mit der netzseitigen Dreiphasenleitung (4), wobei das dreiphasige Wechselspannungsnetz eine konstante Netzfrequenz aufweist.

13. System nach Anspruch 12, wobei die Last (3) ein Motor und/oder Generator ist.

14. System nach Anspruch 12 oder 13, wobei die Induktivität der ersten Drossel (L1) und die Kapazität (C1) des Nebenzweigs so gewählt werden, dass die Gleichtaktresonanzfrequenz des Gleichtaktfilters des Umrichters niedriger als die einundzwanzigfache Netzfrequenz der netzseitigen Dreiphasenleitung (4) liegt.

15. System nach Anspruch 12 oder 13, wobei die Induktivität der ersten Drossel (L1) und die Kapazität (C1) des Nebenzweigs so gewählt werden, dass die Gleichtaktresonanzfrequenz des Gleichtaktfilters des Umrichters niedriger als 700 Hz ist.

## Claims

1. A converter comprising:
a current main branch with a grid-side three-phase line (4), with a DC intermediate circuit (5), and with a load-side three-phase line (6), wherein the grid-side three-phase line (4) being connected to the DC intermediate circuit (5) via a grid-side converter (1), wherein the DC intermediate circuit (5) being connected to the load-side three-phase line (6) via a load-side converter (2), a secondary branch arranged in parallel with the grid-side converter (1) between a first connection point (8) in the grid-side three-phase line (4) and a second connection point (9) in the load-side three-phase line (6), the current main branch comprises a choke (L1) arranged between the first connection point (8) and the second connection point (9), **characterized in that**
the secondary branch comprises three connection lines between the first connection point (8) and the second connection point (9), the secondary branch being arranged such that each connection line between the first connection point (8) and the second connection point (9) comprises a series circuit of a capacitor (C1) and a resistor (R), wherein the second connection point (9) is located in the load-side three-phase line (6), wherein each connection line is connected at a first end to each line of the grid-side three-phase line (4) via a capacitor-star circuit comprising capacitors (C1) of the series circuit, and each connection line being connected at a second end opposite the first end to a respective one of the lines of the three-phase line (6) on the load side, or each connection line being connected at a first end to each line of the three-phase line (6) on the load side via a capacitor-star circuit having capacitors (C1) of the series circuit, and each connection line being connected at a second end opposite the first end to a respective line of the three-phase line (4) on the grid side.

2. Converter according to claim 1, wherein the grid-side converter (1) is an actively switched grid-side converter.

3. Converter according to claim 1 or 2, wherein each possible connection combination of the secondary branch between three lines of the grid-side three-phase line (4) of the first connection point (8) and lines of the load-side three-phase line (6) of the second connection point (9) comprises a different capacitor (C1).

4. Converter according to any one of claims 1 to 3, wherein exactly one connecting line to the first end originates from the respective second end of the branch of each line of the grid-side three-phase line (4) or the load-side three-phase line (6).

5. Converter according to any one of claims 1 to 4, wherein each connecting line comprises a resistor (R) arranged between a star point of the capacitor-star circuit and the second end.

6. Converter according to any one of claims 1 to 5, wherein the grid-side three-phase line (4) is configured to establish a currentconducting connection between a three-phase AC grid with a constant grid frequency and the grid-side converter (1).

7. Converter according to any one of claims 1 to 6, wherein the secondary branch is designed such that only one capacitor (C1) is connected between each line of the first connection point (8) and each line of the second connection point (9).

8. Converter according to any one of claims 1 to 7, wherein the choke (L1) is a current compensated choke (L1).

9. Converter according to any one of claims 1 to 8, wherein the choke (L1) is arranged in the DC intermediate circuit (5).

10. Converter according to any one of claims 1 to 9, comprising a push-pull choke (Ld) arranged between the first connection point (8) and the grid-side converter (1).

11. Converter according to claim 10, wherein the push-pull reactor (Ld) is the rectifier-side reactor of an LCL filter, wherein the LCL filter comprises a line-side reactor arranged between the grid and the first connection point (8), the capacitance of the LCL filter being formed by the capacitance (C1) of the secondary branch.

12. A system comprising:
a converter according to any one of claims 1 to 11,
a load (3) connected to the load-side three-phase line (6), and
a three-phase AC grid connected to the grid-side three-phase line (4), wherein the three-phase AC grid having a constant grid frequency.

13. System according to claim 12, wherein the load (3) is a motor and/or generator.

14. System according to claim 12 or 13, wherein the inductance of the first reactor (L1) and the capacitance (C1) of the secondary branch being selected such that the common mode resonance frequency of the common mode filter of the converter is lower than twenty-one times the grid frequency of the line-side three-phase line (4).

15. System according to claim 12 or 13, wherein the inductance of the first reactor (L1) and the capacitance (C1) of the secondary branch being selected such that the common mode resonance frequency of the common mode filter of the converter is lower than 700 Hz.

## Revendications

1. Convertisseur comprenant : une branche de courant principale avec un circuit triphasé côté réseau, (4), un circuit intermédiaire en CC (5), et un circuit triphasé côté charge (6), dans lequel le circuit triphasé côté réseau (4) est connecté au circuit intermédiaire en CC (5) par un rectificateur de réseau (1), dans lequel le circuit intermédiaire en CC (5) est connecté à le circuit triphasé côté charge (6) par un onduleur de charge (2), avec une branche secondaire disposée en parallèle au rectificateur de réseau (1) entre un premier point de connexion (8) dans le circuit triphasé côté réseau (4) et un second point de connexion (9) dans le circuit triphasé côté charge (6), la branche de courant principale comprenant une bobine de self (L1) disposée entre le premier point de connexion (8) et second point de connexion (9), **caractérisé en ce que** la branche secondaire comprend trois lignes de liaison entre le premier point de connexion (8) et le second point de connexion (9), la branche secondaire étant configurée en sorte que chaque ligne de liaison entre le premier point de connexion (8) et le second point de connexion (9) comprend un circuit en série de un condensateur (C1) et une résistance (R), dans lequel le second point de connexion (9) est positionné dans le circuit triphasé côté charge (6), dans lequel chaque ligne de liaison est connectée à une première extrémité à chaque conducteur du circuit triphasé côté réseau (4) par un circuit capacitif en étoile comprenant les condensateurs (C1) du circuit série, et chaque ligne de liaison est connectée à une seconde extrémité opposée à la première extrémité à un respectif conducteur des conducteurs du circuit triphasé côté charge (6), ou bien chaque ligne de liaison est connecté à une première extrémité avec chaque conducteur du circuit triphasé côté charge (6) par un circuit capacitif en étoile comprenant les condensateurs (C1) du circuit série, et chaque ligne de liaison est connectée à une seconde extrémité opposée à la première extrémité à un respectif conducteur des conducteurs du circuit triphasé côté réseau (4).

2. Convertisseur selon la revendication 1, dans lequel le rectificateur de réseau (1) est un rectificateur de réseau à commutation active.

3. Convertisseur selon l'une des revendications 1 ou 2, dans lequel chaque possible combinaison de connexion de la branche secondaire entre trois conducteurs du circuit triphasé côté réseau (4) du premier point de connexion (8) et conducteurs du circuit triphasé côté charge (6) du second point de connexion (9) comprend un condensateur distinct (C1).

4. Convertisseur selon l'une des revendications de 1 à 3, avec exactement une ligne de liaison entre la première extrémité et la seconde extrémité respective du circuit secondaire pour chaque conducteur du circuit triphasé côté réseau (4) ou bien du circuit triphasé côté charge (6).

5. Convertisseur selon l'une des revendications de 1 à 4, dans lequel chaque ligne de liaison comprend une résistance (R) entre un noeud central du circuit capacitif en étoile et la seconde extrémité.

6. Convertisseur selon l'une des revendications de 1 à 5, dans lequel le circuit triphasé côté réseau (4) est configuré pour créer une connexion porteuse de courant entre un réseau triphasé en CA avec une fréquence de réseau constante et le rectificateur de réseau (1).

7. Convertisseur selon l'une des revendications de 1 à 6, dans lequel la branche secondaire est configurée en sorte qu'un seul condensateur (C1) est connecté entre chaque ligne du premier point de connexion (8) et chaque ligne du second point de connexion (9).

8. Convertisseur selon l'une des revendications de 1 à 7, dans lequel la bobine de self (L1) est une bobine à compensation de courant.

9. Convertisseur selon l'une quelconque des revendications précédentes, dans lequel la bobine de self (L1) est dans le circuit intermédiaire en CC (5).

10. Convertisseur selon l'une des revendications de 1 à 9, comprenant une bobine de self à push-pull disposée entre le premier point de connexion et le rectificateur de réseau (1).

11. Convertisseur selon la revendication 10, dans lequel la bobine de self à push-pull (Ld) est la bobine de self côté rectificateur d'un filtre LCL, dans lequel le filtre LCL comprend une bobine de self côté réseau disposé entre le réseau et le premier point de connexion (8), la capacitance du filtre LCL étant fournie par le condensateur (C1) de la branche secondaire.

12. Un système comprenant : un convertisseur selon l'une quelconque des revendications de 1 à11, une charge (3) connecté au circuit triphasé côté charge (6), et un réseau triphasé en CA connecté au circuit triphasé côté réseau (4), dans lequel le réseau triphasé en CA a une fréquence de réseau constante.

13. Système selon la revendication 12, dans lequel la charge (3) est un moteur et/ou une génératrice.

14. Système selon l'une des revendications 12 ou 13, dans lequel l'inductance de la première bobine de self (L1) et la capacitance (C1) de la branche secondaire sont choisies en sorte que la fréquence de résonance de mode commun du filtre de mode commun du convertisseur est plus petite que la fréquence de réseau du circuit triphasé côté réseau multipliée par vingt-et-un.

15. Système selon l'une des revendications 12 ou 13, dans lequel l'inductance de la première bobine de self (L1) et la capacitance (C1) de la branche secondaire sont choisies en sorte que la fréquence de résonance de mode commun du filtre de mode commun du convertisseur est plus petite que 700 Hz.
